# EUROPEAN PATENT APPLICATION

(11) **EP 2 863 643 A1**
(43) Date of publication of application: **22.04.2015**
(21) Application number: 14186152.6
(22) Date of filing: 24.09.2014
(51) Int. Cl.: H04N 21/414, H04N 21/2665, H04N 21/43, H04N 21/41

(54) **Audio and video synchronization**

(30) Priority: 02.10.2013 IN CH44752013
(71) Applicant: Nokia Corporation, 02610 Espoo (FI)
(72) Inventor: Mishra, Pranav, 560037 Bangalore (IN); Patwardhan, Puskhar, Maharashtra (IN); Kannan, Rajeswari, 560066 bangalore (IN)
(74) Representative: Nokia Corporation

(57) **Abstract**

The invention relates to audio-video-synchronization, where light is captured from a light source. At least a timestamp is determined from the light. Audio stream is received from an audio source, and the audio stream is played from the point defined by the time stamp. The invention relates also to a method and technical equipment for generating data comprising at least time stamp of a video stream and signalling the generated data by means of a light from a light source.

## Description

### Background

People have got used to see televisions or other video displaying devices (e.g. advertisement screens) around. For example, lobbies may have multiple televisions so that clients can spend the waiting time by watching television programs. As an another example, big screens used e.g. for advertising can be found from squares, marketplaces, by the street etc.

### Summary

Now there has been invented an improved method and technical equipment implementing the method, by which the user experience when watching television programs or other audiovisual content can be improved. In addition, there has been invented an improved method for synchronization. Various aspects of the invention include a methods, a use, apparatuses, a system and a computer readable media comprising a computer program stored therein, which are characterized by what is stated in the independent claims. Various embodiments of the invention are disclosed in the dependent claims and throughout the specification.

According to first aspect, there is provided a method comprising capturing light from a light source; determining at least a time stamp from the light; receiving an audio stream from an audio source; and playing the audio stream from the point defined by the time stamp.

According to a second aspect, there is provided an apparatus comprising at least one processor, memory including computer program code, the memory and the computer program code configured to, with the at least one processor, cause the apparatus to perform at least the following: capturing light from a light source; determining at least a time stamp from the light; receiving an audio stream from an audio source; and playing the audio stream from the point defined by the time stamp.

According to a third aspect there is provided a computer program product embodied on a non-transitory computer readable medium, comprising computer program code configured to, when executed on at least one processor, cause an apparatus or a system to: capture light from a light source; determine at least a time stamp from the light; receive an audio stream from an audio source; and play the audio stream from the point defined by the time stamp.

According to a fourth aspect there is provided a system comprising at least one processor, memory including computer program code, the memory and the computer program code configured to, with the at least one processor, cause the system to perform at least the following: capturing light from a light source; determining at least a time stamp from the light; receiving an audio stream from an audio source; and playing the audio stream from the point defined by the time stamp.

According to a fifth aspect, there is provided an apparatus comprising means for processing, means for storing data, means for capturing light from a light source; means for determining at least a time stamp from the light; means for receiving an audio stream from an audio source; and means for playing the audio stream from the point defined by the time stamp.

According to an embodiment, an identification is determined from the light; and audio stream is obtained from the audio source by means of the identification.

According to an embodiment, a first time stamp is determined from the light, an audio stream is received from an audio source, where the received audio stream has a starting point in an audio file being pointed by the first time stamp, and utilizing subsequent time stamps to synchronize the received audio with a displayed video.

According to an embodiment, the audio source is an audio server.

According to an embodiment, the audio stream is received from the light source, by capturing the light and decoding the audio stream out of the lights.

According to an embodiment, the light is captured from a LED light of a television.

According to an embodiment, the audio stream is related to a video in a television.

According to a sixth aspect, there is provided a method comprising capturing light from a light source; determining a synchronization data from the light; and synchronizing media content by means of the synchronization data.

According to a seventh aspect, there is provided an apparatus, comprising at least one processor, memory including computer program code, the memory and the computer program code configured to, with the at least one processor, cause the apparatus to perform at least the following: generating data comprising at least time stamp of a video stream; signalling the generated data by means of a light from a light source.

According to an eighth aspect, there is provided a method comprising generating data comprising at least time stamp of a video stream and signalling the generated data by means of a light from a light source.

According to a ninth aspect, there is provided a computer program product embodied on a non-transitory computer readable medium, comprising computer program code configured to, when executed on at least one processor, cause an apparatus or a system to generating data comprising at least time stamp of a video stream and signalling the generated data by means of a light from a light source.

According to an embodiment, the data is generated to comprise also an identification for an audio stream corresponding the video stream.

According to an embodiment, an audio stream is signalled by means of the light from the light source.

According to an embodiment, the light source is a LED light.

According to an embodiment, the apparatus is a video displaying device.

According to a tenth aspect, there is provided a use of a light to determine synchronization data for synchronizing media content.

### Description of the Drawings

In the following, various embodiments of the invention will be described in more detail with reference to the appended drawings, in which
- Fig. 1: shows an embodiment of a present solution;
- Fig. 2: shows another embodiment of the present solution;
- Fig. 3: shows yet another embodiment of the present solution;
- Fig. 4: shows an embodiment of an apparatus;
- Fig. 5: shows an embodiment of a layout of an apparatus;
- Fig. 6: shows an embodiment of a system; and
- Fig. 7: shows an embodiment of a television apparatus.

### Description of Example Embodiments

In the following, several embodiments of the invention will be described in the context of public television. It is to be noted and as described at the end of this description, that the invention is not limited to public televisions. In fact, the different embodiments have applications in any environment where improvement of audio reception is required. Yet further, the teachings of the present solution can also be utilized in any type of synchronization, as will be described below.

In the following description term "television" refers to television devices, screens or any video displaying device. Term "mobile device" refers to any wireless device that may be capable of communication over network and that has audio capability as well as means for capturing image data (e.g. still images or video frames). The mobile device is thus a mobile communication device or a mobile stand-alone device. The mobile device may have a loudspeaker, or may be connected to one. The mobile device may have a camera or may be connected to one. The network may be wireless or wired network. However, better user experience is obtained with wireless network. As will become clear from the following description, the network is not necessary in a situation, where LED lights, or any other light source, are configured to transmit also the audio. This feature is discussed in more clear later, but in that case the mobile device does not need to be a mobile communication device, but any other device capable of capturing image data.

The present solution is based on an idea, where LED (Light Emitting Diode) lights, or some other light source, being installed on a television blink and transmit data. The data may be sensed by a sensing device, such as for example a camera, that can be a part of a mobile device. LEDs are configured to transmit a time stamp for each frame or at least one of the frames being displayed on the television. The television may also send a unique identification along with the timestamp. In some embodiments, the timestamp may be an audio timestamp and it may not be directly associated with the time instant at which the particular frame is displayed. When the television decodes the broadcasted stream, it is aware of the timestamps for the frames being displayed on the television. The audio on the television is also played correctly, but it is not audible to the viewer, because of a long distance between the watcher and the television, because of background noise, or because of any other reason. Even though, audio can be transmitted by other means, still audio-to-video synchronization needs to be maintained. The present solution provides a timestamp of the frame being displayed at the current moment to the mobile device, so that the mobile device decode and render the audio from that point.

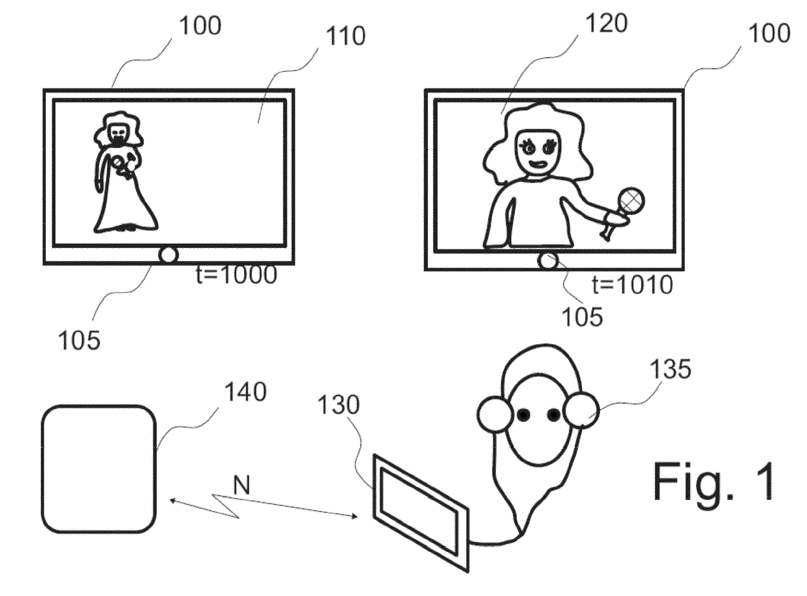

Figure 1 illustrates an embodiment of the solution. A television 100 displays a frame 110 at time t=1000. The timestamp "1000" is transmitted through a light source 105, for example LED lights. The television 100 displays a frame 120 at time t=1010. The timestamp "1010" is transmitted through the light source 105, for example LED lights. A mobile device 130 captures the transmitted timestamps e.g. by a camera, and acquires the corresponding audio from a server 140 by using a network connection N. The server 140 may be a server of a TV service provider. For example, the company which provides the television channel being broadcasted in the television. The server location may be preprogrammed in the mobile device's application that is executed for the purposes of the present solution. Instead, the light source 105 may transmit the server location to the mobile device. For example, a http (Hypertext Transfer Protocol) address of the server is few bytes and thus transferrable through the light.

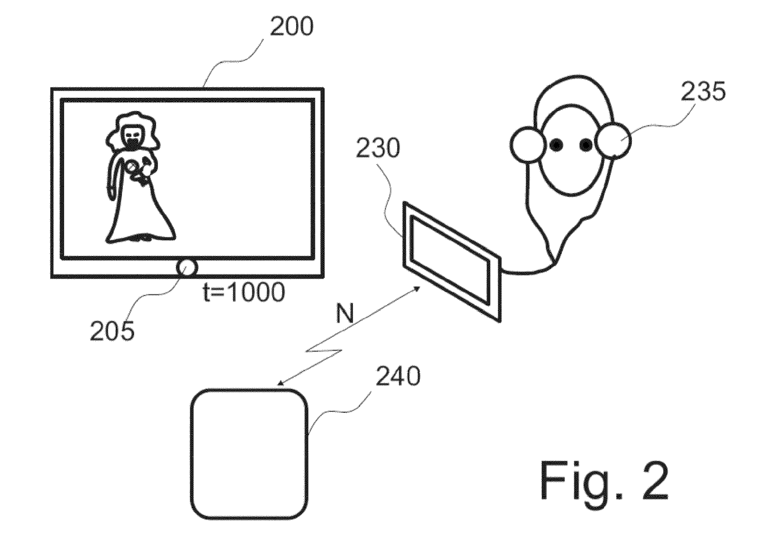

In order to maintain a lip synchronization, a delay between audio and video timestamps should be less than 200 ms, as agreed on the field. In some embodiments, the delay can deviate slightly or greatly from the given 200ms. However, for taking the lip synchronization into account, a further embodiment is provided and illustrated in Figure 2. A light source 205, e.g. LED lights, of a television 200 transmits data containing an identification and a timestamp "t=1000". The identification identifies the audio in the server. A mobile device 230 receives the data from the light source 205 by means of a camera. The sensing device, e.g. a camera, is configured to capture the blinking light by continuously taking images of the scene where the LED light is blinking. The light coming from the LED is spread across the sensor and a rolling shutter may be utilized to decode the data. The stream of received blinks are then decoded by the mobile device to have the data (i.e. the timestamp and the identification) therein. The mobile device 230 fetches audio from a server 240 over a network connection by means of the identification and the timestamp. After receiving the audio from the server 240, the mobile device 230 plays audio from the timestamp being received.

Alternatively, in addition to the time stamp for each frame being displayed on the television, the light source may also transmit the audio from the television. In that case no network connection is needed. Therefore, the light source may transmit one or more timestamps and a unique identification, or one or more timestamps and corresponding audio. In the latter case, the audio will be decoded on the device, and therefore - if a timestamp is not known - the audio cannot be synchronized with video. It is appreciated that transmission a complete audio through light requires camera with higher resolution. The camera is configured to decode the light received from the light source. The data rate is proportional to the number of rows present on the camera. This can be expected to happen near future.

As shown in Figures 1 and 2, the user is wearing a headset 135, 235, to listen the audio being received. In some embodiments, the user may wear wearable glasses. The wearable glasses may capture the light from the light source (i.e. operate as the camera), which light is processed to determine the data therein. When the audio file is received from the server, the speaker connected to the glasses is able to play the audio properly. Instead of the headset or wearable glasses, the user may listen the audio through a loudspeakers of the mobile device.

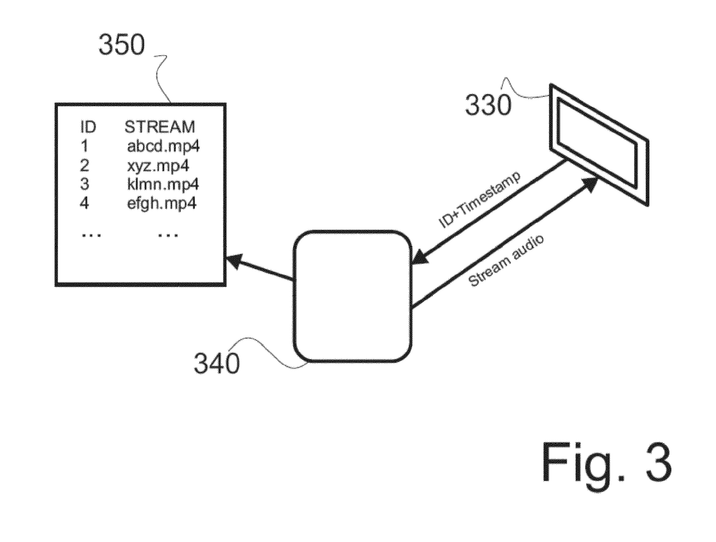

Figure 3 illustrates an embodiment in more detailed manner. The audio from a file and streamed to the mobile device 330 is based on the identification. The identification is received from the television by the mobile device 330 as described above. With respect to Figure 3, if the identification is "ID=1", a file "abcd.mp4" from a database 350 of the server 340. The audio files may be television channel specific or program specific. In the present embodiment the audio file relates to the television channel, and therefore when a program changes, no new identification is needed. The timestamp identifies from what duration the audio is to be transmitted from said file. For example, t=10000 means that audio needed on the device is from t>10000. And there is no use for audio which is from t<10000. Once the audio stream from the file matching the identification and from the time pointed by the timestamp is being received at the mobile device 330, it will be played from the current timestamp received from the light source of the television. This means that there may be multiple time stamps received from the television in order to play the audio correctly: the first one for defining to the server the starting point of an audio file, and subsequent ones for determining the current place for playing the audio. However, the latter time stamp is the most important for synchronization. In subsequent transmission to the server, only the time stamp (and not the audio channel number, i.e. the identification) may need to be updated in order to determine the current location in the audio file. If the user looks at a new television having different channel going on, both identification and timestamp needs to be updated to the server to have a correct audio.

It is realized, that the audio is decoded and rendered according to the time stamps being received from the light source. This ensures accurate Audio-Video-synchronization between audio and video from the listener's point of view. And if the user switches his view to another television, the audio is fetched from the server by means of an appropriate identification, and is rendered with correct audio-video-synchronization in the mobile device.

The previous embodiments may be technically implemented according to following description.

The light source, e.g. LED, on the television will transmit audio channel number (ACN) and the presentation time stamp (PTS). The audio channel number is an example of the identification being mentioned above. The presentation time stamp is obtained from the MPEG (Moving Pictures Expert Group) video stream, and it represents the time at which the frame is displayed on the screen. By utilizing the other information present in MPEG transport stream (MPEG TS), e.g. program clock references (PCR's) and decoding time stamp (DTS's), the television ensures that the frames are displayed at appropriate time, as desired at the decoder.

The audio channel number is utilized to indicate to the server the appropriate audio stream to be streamed to the mobile device. At the server, appropriate MPEG audio transport streams have constructed for each of the television channels being identified by the audio channel number. They may contain all the time stamp information like PCR's, DTS's and PTS's.

According to an embodiment, ACN and PTS transmitted from the television (through the light source) is received on the mobile device. The mobile device connects to the server and transmits the ACN and PTS to it. Based on the ACN and PTS, the server starts sending the MPEG audio transport streams, approximately from the point where the video PTS are currently. The audio decoder on the mobile device starts decoding and rendering the audio from the stream obtained. The rendering is done at a higher/lower speed until synchronization is achieved between audio and video PTS. For example, the audio may be behind the video, and so it is decoded and rendered faster, until the audio and video PTS are brought into synchronization.

Once this synchronization is achieved, the audio can be decoded and rendered independently. The MPEG audio transport stream contains the time stamp information, and therefore the rendering at correct time can be achieved independently from the television, once the initial synchronization is achieved. Therefore, when watching a television on which a news channel is being displayed; if the user looks in another direction or moves around, he can still hear the audio, and when s/he returns to the television, the audio and the video will be in perfect synchronization.

If the user looks at another television:
a) if it is the same audio channel, then based on the PTS being transmitted from the television, the audio is rendered (faster/slower) so that for current television, the audio and video are in synchronization with respect to the presentation time stamp. It is appreciated that two televisions may be transmitting the MPEG stream with a delay.
b) If it is a different channel, then the mechanism disclosed above (fetching audio by means of identification and timestamp) is performed for this channel. The above disclosed steps are followed until the audio is in synchronization with the video.

According to an embodiment, the invention may be implemented by transmitting audio and/or video data via a real-time transfer protocol (RTP) that may comprise separate time stamps for the audio and video streams. Audio and video encoders may operate on different time bases and therefore an audio time stamp may not be generated at the same time instant as a video time stamp. In such embodiments the time stamp transmitted from the television may comprise either an audio time stamp, a video time stamp, or both. The mobile device may use the audio time stamp directly to synchronize the received audio as described elsewhere in this document. In case of receiving a video time stamp, the mobile device may determine the closest audio timestamp related to the received video time stamp and use the determined audio timestamp for synchronization.

Similar technique can be used for splitting up a single screen. For example a home television screen is divided into multiple sections, and audio being transmitted for each of them through light source, such as LEDs. In such a solution, there may be as many LEDs as there are sections in the screen. People sitting in a television room can listen the audio perfectly based on the part of the television they are looking at.

Lights can also be utilized for synchronization in general, for example to synchronize an event being captured by multiple cameras. For example, a light or multiple surrounding lights may be programmed to blink a certain code, e.g. a time stamp. When the lights are blinking, the different cameras capturing the scene can be synchronized. For example, videos from different cameras can be synchronized with the help of blinking lights coming from the surrounding lights. This kind of a solution may be implemented in a hall having various amount of lights. For example, the lights used for synchronization can be lights falling on a stage, on a musician or lights falling on the audience. It is appreciated that in this kind of a solution the time stamp is determined by the cameras, and the time stamps are used as synchronization data in the cameras, when videos from the cameras are synchronized.

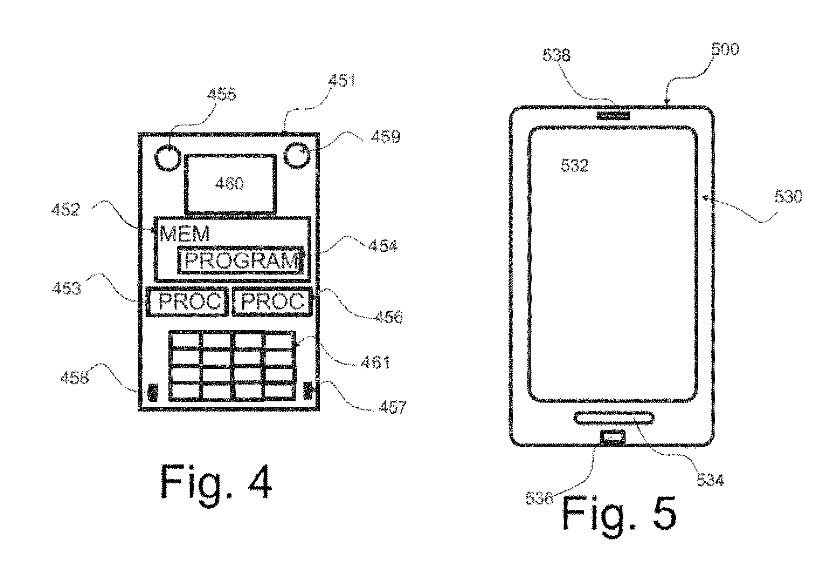

Example of an apparatus is illustrated in Fig. 4. The apparatus 451 contains memory 452, at least one processor 453 and 456, and computer program code 454 residing in the memory 452. The apparatus according to the example of Figure 1, also has one or more cameras 455 and 459 for capturing image data, for example video. One of the cameras 455, 459 can be an IR (Infrared) camera, for example. Data transmitted can then be done through IR LED's on the television set. Such IR LED's are invisible to the human eye. The apparatus may also contain one, two or more microphones 457 and 458 for capturing sound. The apparatus may also contain sensor for generating sensor data relating to the apparatus' relationship to the surroundings. The apparatus also comprises one or more displays 460 for viewing single-view, stereoscopic (2-view) or multiview (more-than-2-view) and/or previewing images. Anyone of the displays 460 may be extended at least partly on the back cover of the apparatus. The apparatus 451 also comprises an interface means (e.g. a user interface) which allows a user to interact with the apparatus. The user interface means is implemented either using one or more of the following: the display 460, a keypad 461, voice control, or other structures. The apparatus is configured to connect to another device e.g. by means of a communication block (not shown in Fig. 4) able to receive and/or transmit information though a wireless or a wired network.

Figure 5 shows a layout of an apparatus according to an example embodiment. The apparatus 500 is for example a mobile terminal (e.g. mobile phone, a smart phone, a camera device, a tablet device) or other user equipment of a wireless communication system. Embodiments of the invention may be implemented within any electronic device or apparatus, such a personal computer and a laptop computer.

The apparatus 500 shown in Figure 5 comprises a housing 530 for incorporating and protecting the apparatus. The apparatus 500 further comprises a display 532 in the form of e.g. a liquid crystal display. In other embodiments of the invention the display is any suitable display technology suitable to display an image or video. The apparatus 500 may further comprise a keypad 534 or other data input means. In other embodiments of the invention any suitable data or user interface mechanism may be employed. For example the user interface may be implemented as a virtual keyboard or data entry system as part of a touch-sensitive display. The apparatus may comprise a microphone 536 or any suitable audio input which may be a digital or analogue signal input. The apparatus 50 may further comprise an audio output device which in embodiments of the invention may be any one of: an earpiece 538, speaker, or an analogue audio or digital audio output connection. The apparatus 500 of Figure 5 also comprises a battery (or in other embodiments of the invention the device may be powered by any suitable mobile energy device such as solar cell, fuel cell or clockwork generator). The apparatus 500 according to an embodiment may comprise an infrared port for short range line of sight communication to other devices. In other embodiments the apparatus 500 may further comprise any suitable short range communication solution such as for example a Bluetooth wireless connection, Near Field Communication (NFC) connection or a USB/firewire wired connection. The apparatus 500 according to an embodiment comprises a camera or is connected to one wirelessly or with wires.

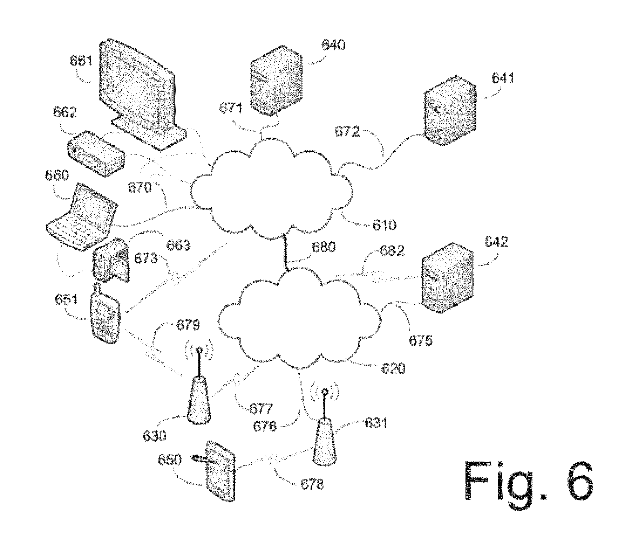

Figure 6 shows an example of a system, where the apparatus is able to function. In Fig. 6, the different devices may be connected via a fixed network 610 such as the Internet or a local area network; or a mobile communication network 620 such as the Global System for Mobile communications (GSM) network, 3rd Generation (3G) network, 3.5th Generation (3.5G) network, 4th Generation (4G) network, Wireless Local Area Network (WLAN), Bluetooth®, or other contemporary and future networks. Different networks are connected to each other by means of a communication interface 680. The networks comprise network elements such as routers and switches to handle data (not shown), and communication interfaces such as the base stations 630 and 631 in order for providing access for the different devices to the network, and the base stations 630, 631 are themselves connected to the mobile network 620 via a fixed connection 676 or a wireless connection 677.

There may be a number of servers connected to the network, and in the example of Fig. 6 are shown servers 640, 641 and 642, each connected to the mobile network 620, which servers, or one of the servers, may be arranged to operate as computing nodes (i.e. to form a cluster of computing nodes or a so-called server farm) for the purposes of the present solution Some of the above devices, for example the computers 640, 641, 642 may be such that they are arranged to make up a connection to the Internet with the communication elements residing in the fixed network 610.

There are also a number of end-user devices such as mobile phones and smart phones 651 for the purposes of the present embodiments, Internet access devices (Internet tablets) 650, personal computers 660 of various sizes and formats, and computing devices 662 of various sizes and formats, and television systems 661 of various sizes and formats. These devices 650, 651, 660, 661, 662 and 663 can also be made of multiple parts. In this example, the various devices are connected to the networks 610 and 620 via communication connections such as a fixed connection 670, 671, 672 and 680 to the internet, a wireless connection 673 to the internet 610, a fixed connection 675 to the mobile network 620, and a wireless connection 678, 679 and 682 to the mobile network 620. The connections 671-682 are implemented by means of communication interfaces at the respective ends of the communication connection. All or some of these devices 650, 651, 660, 661, 662 and 663 are configured to access a server 640, 641, 642.

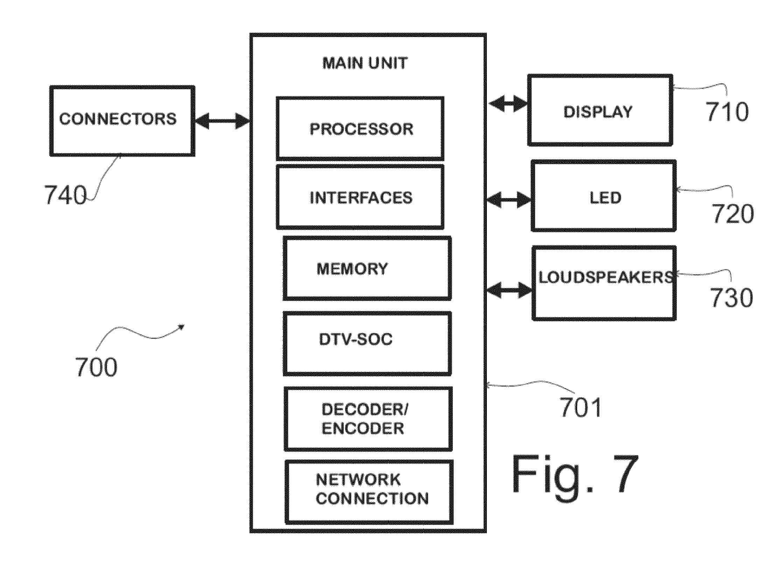

An example of a television apparatus 700 is illustrated in Figure 7. The apparatus 700 comprises a main unit 701 that contains - in this example - a processor, interfaces, memory, digital television system-on-α-chip (DTV-SOC), decoder/encoder, network connections. It is appreciated that a main unit 701 does not necessarily have to contain all the previous elements and/or may contain some further elements. In addition to the main unit, the television apparatus 700 comprises a display 710, that can be one of the following: LCD (Liquid Crystal Display), LED, OLED (Organic Light Emitting Diodes), Plasma, QD (Quantum Dot) or some other display technology. In addition, the television apparatus 700 comprises LED for transmitting data through light (e.g. VLC, Visible Light Communication). The television apparatus 700 also may comprise audio output, e.g. loudspeakers 730. In addition the television apparatus 700 comprises connectors 740, e.g. LAN (Local Area Network) port, USB (Universal Serial Bus) port, gaming connectors, HDMI (High Definition Multimedia Interface) port, etc.

The various embodiments may provide advantages. For example, prior to the present solution there hasn't been a way to listen a certain television among a plurality of televisions. Even though one option is to transmit the audio via FM (Frequency Modulation), in that case the user has to tune in to an appropriate FM channel. If there are multiple televisions, the process will become burdensome. With the glasses, wearables, headsets having cameras or any other device having a camera or having a connection to a camera, audio can be received and rendered perfectly for the television channel being looked at. This is especially beneficially in a hall or a lobby with multiple TV displays or with a big screen or a combination of those, an advertisement screen by a street or on a square, etc.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

It is obvious that the present invention is not limited solely to the above-presented embodiments, but it can be modified within the scope of the appended claims.

## Claims

1. A method, comprising:
capturing light from a light source;
determining at least a time stamp from the light;
receiving an audio stream from an audio source; and
playing the audio stream from the point defined by the time stamp.

2. The method according to claim 1, further comprising:
determining an identification from the light; and
obtaining the audio stream from the audio source by means of the identification.

3. The method according to claim 2, further comprising:
determining a first time stamp from the light,
receiving the audio stream from the audio source, where the received audio stream has a starting point in an audio file being pointed by the first time stamp, and
utilizing subsequent time stamps to synchronize the received audio with a displayed video.

4. An apparatus comprising:
means for capturing light from a light source;
means for determining at least a time stamp from the light;
means for receiving an audio stream from an audio source; and
means for playing the audio stream from the point defined by the time stamp.

5. The apparatus according to claim 4, further comprising:
means for determining an identification from the light; and
means for obtaining the audio stream from the audio source by means of the identification.

6. The apparatus according to claim 4 or 5, further comprising:
means for determining a first time stamp from the light,
means for receiving the audio stream from the audio source, where the received audio stream has a starting point in an audio file being pointed by the first time stamp, and
means for utilizing subsequent time stamps to synchronize the received audio with a displayed video.

7. The apparatus according to any of the claims 4 to 6, wherein the audio source is an audio server.

8. The apparatus according to any of the claims 4 to 7, wherein the audio stream is related to a video in a television.

9. A computer program configured to:
capture light from a light source;
determine at least a time stamp from the light;
receive an audio stream from an audio source; and
play the audio stream from the point defined by the time stamp.

10. An apparatus, comprising:
means for generating data comprising at least time stamp of a video stream;
means for signalling the generated data by means of a light from a light source.

11. The apparatus according to claim 10, further comprising:
means for generating data comprising also an identification for an audio stream corresponding the video stream.

12. The apparatus according to claim 11, further comprising:
means for signalling the audio stream by means of the light from the light source.

13. The apparatus according to any of the claims 10 to 12, wherein the apparatus is a video displaying device.

14. A method comprising:
generating data comprising at least time stamp of a video stream;
signalling the generated data by means of a light from a light source.

15. A computer program configured to:
generate data comprising at least time stamp of a video stream;
signal the generated data by means of a light from a light source.
